# EUROPEAN PATENT SPECIFICATION

(11) **EP 0 431 818 B1**
(45) Date of publication and mention of the grant of the patent: **24.07.1996**
(21) Application number: 90312908.8
(22) Date of filing: 28.11.1990
(51) Int. Cl.: G05B 19/18, G05B 19/406

(54) **Apparatus for detecting machining conditions in a machine tool**
Gerät zur Erfassung von Bearbeitungsbedingungen in einer Werkzeugmaschine
Appareil pour détecter les conditions d'usinage d'une machine outil

(30) Priority: 08.12.1989 JP 317825/89
(43) Date of publication of application: 12.06.1991
(73) Proprietor: SEIKO SEIKI KABUSHIKI KAISHA, Narashino-shi Chiba (JP)
(72) Inventor: Ando, Shigenori, c/o Seiko Instruments Inc., Koto-ku, Tokyo (JP)
(74) Representative: Sturt, Clifford Mark

(56) References cited:
- EP-A- 0 315 469
- US-A- 4 031 368
- US-A- 4 642 617
- US-A- 4 853 680

## Description

The present invention relates to an apparatus for detecting machining conditions in a machine tool during a machining process.

Prior art techniques for detecting machining conditions in a machine tool during a machining process can involve the detection of (1) machining strength or force, (2) vibration or sounds, (3) heat, (4) machining power, (5) machining dimensions (residual stock removal quantity) or (6) the excitation current (particularly in the case of a spindle supported by a magnetic bearing).

The following are specific examples.

In the case of machining strength or force (1), the latter is detected by use of (1a) a distortion gauge on a piezo-electric element which is mounted on a work rest or a tool rest, and (1b) a distortion gauge mounted on a work bearing centre, or is detected on the basis of (1c) variations in pocket pressure of a static pressure fluid bearing which bears a tool (workpiece) spindle.

In the case of vibrations and sounds (2), the latter are detected by the use of (2a) an AE sensor or a vibration sensor which is provided on the work rest, the tool rest bearing centre or a shoe, and (2b) the AE sensor or a vibration sensor which is attached to the tool (workpiece) spindle for carrying a rolling bearing.

An example of a system in which vibrations of a cutting tool are sensed for transients indicating impending tool breakage using a high pass filter to remove machining noise is disclosed in US Patent No 4,853,680.

In the case of heat (3), the latter is detected by heat detection sensors embedded in the workpiece and the tool.

In the case of machining power (4), the detection of the latter involves the detection of the rotary driving power of the tool (workpiece) spindle.

In the case of machining dimensions (residual stock removal quantity) (5), the machining dimensions are detected on the basis of a difference between the cutting feed per stroke and the dimensions of the workpiece during the machining process.

In the case of the excitation current in a magnetic bearing (6), the average excitation current is detected. An example of such a system is disclosed in European Patent Application EP-A2-0315469.

The following are defects inherent in the above-mentioned techniques for detecting the machining conditions.

In the case of the machining strength or force (1), the detection of the machining force (1a) is limited to a case where the workpiece is movable within a given range as well as being restricted so as to support rigidity thereof, (1b) limits the bearing mode of the workpiece to the centre bearing, and (1c) decreases responsiveness to variations in speed.

In the case of vibrations and sounds (2), the detections of vibrations and sounds are applied only to abnormalities with a narrow range, and (2b) involves the use of a bearing so as to damp the vibrations, causing a drop in the S/N ratio because of detecting even rolling vibrations.

The detection of heat (3) is of low practibility and responsiveness.

The detection of machining power (4), in addition to a low responsiveness, is limited to the power which acts only in a tangential line and is insufficient for a grinding process wherein variations in a normal line are large.

The detection of machining dimensions (5) is of slow responsiveness because of being detected after effecting the machining process.

In the case of excitation current in a magnetic bearing (6), the excitation current cannot be detected in a frequency domain, so that the detection of the excitation current is averaged.

In any case, the detecting function is low. Furthermore, the above-mentioned means are simple condition-detecting means but are unable to analyze multiple conditions by highly accurate detection and to output an output signal capable of effecting the corresponding control over the machine tool.

It is therefore an object of the present invention to provide an apparatus for detecting machining condition in a machine tool with high accuracy and for analyzing and controlling multiple machine conditions.

According to the present invention, there is provided an apparatus for detecting machining conditions in a machine tool characterised by electro-magnetic bearing means for magnetically supporting at least one of a tool spindle and a work spindle for holding a workpiece; a detector for detecting a variable which depends upon the electro-magnetic state of the bearing means and for producing detection signals in relation thereto; a plurality of different frequency band pass filters coupled to the detector so as to receive the detection signals from the latter; and comparator means for comparing output signals of said different frequency band pass filters with respective set values.

Preferably, the detector is an excitation current detector for detecting excitation current applied to the electro-magnetic bearing means to operate the latter.

Preferably, one of said frequency band pass filters comprises a workpiece rotational frequency band pass filter which is adapted to pass a frequency component corresponding to the eccentricity of the machining face of the workpiece.

Moreover, one of said frequency band pass filters may comprise a workpiece rotational frequency partial band pass filter which is adapted to pass a frequency component corresponding to sectional distortion of the machining face of the workpiece.

Additionally, one of said frequency band pass filters may comprise a tool spindle rotary bending resonant frequency band pass filter which is adapted to pass a frequency component corresponding to the machining force applied to the workpiece.

Additionally, one of said frequency band pass filters may comprise a smoothing circuit which averages said detection signals in time domain and outputs signals when neither eccentricity nor distortion appears on the machining face of the workpiece.

The invention also comprises a machine tool provided with such an apparatus, the machine tool having a control unit which receives signals from the comparator means and which controls the operation of the machine tool in relation thereto.

The excitation current detector may be arranged to detect a change of the excitation current of the electro-magnetic bearing means according to displacements with respect to the radial direction of a work spindle or a tool spindle. Such displacements may correspond to conditions under which the machine tool starts operating, the tool contacts the workpiece to follow various unfinished faces, a machining condition, or a machining face condition of the workpiece during machining. As a result of inputting the detection signals to the plurality of frequency band pass filters, the machining conditions and the workpiece face condition may be discriminated.

The comparator means compare the output signals from the frequency band pass filters with the set reference values. The respective conditions may be judged from the comparative results. Comparative judgement signals are inputted to the control unit, thereby controlling the machine tool to automatically perform appropriate machining operations.

The invention is illustrated, merely by way of example in the accompanying drawings, in which:-
Figure 1 is partly a plan view of an internal grinding machine provided with an apparatus according to the present invention, and partly a block diagram of the said apparatus which is adapted to detect grinding/machining conditions;
Figure 2 is a block diagram illustrating a grinding/machining condition detecting circuit of the grinding/machining condition detecting apparatus shown in Figure 1; and
Figure 3 is a flowchart showing control processes of the internal grinding machine of Figure 1.

In the drawings there is shown an internal grinding machine constituting a machine tool which incorporates an apparatus for detecting machining conditions according to the present invention.

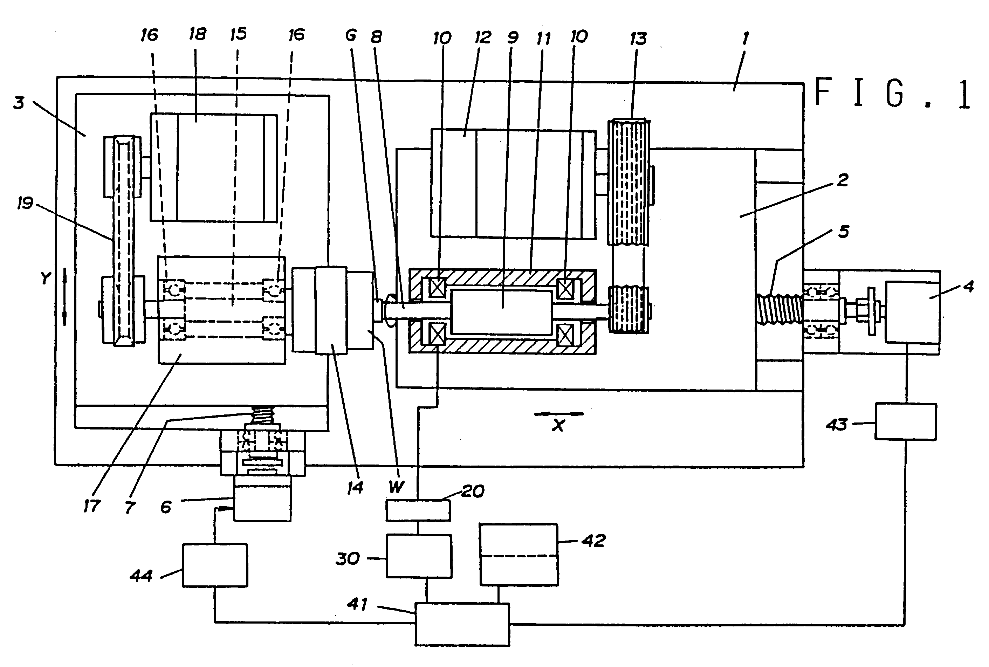

Mounted on a bed 1, as shown in Figure 1, are a wheel spindle stock 2 slidable in X-axis directions and a work head table 3 slidable in Y-axis directions. The wheel spindle stock 2 is moved back and forth in the X-axis directions by a servo motor 4 through a feed screw mechanism 5. The work head table 3 is moved to and fro in the Y-axis directions by a servo motor 6 through a feed screw mechanism 7.

A wheel head 11 and a motor 12 are mounted on the wheel spindle stock 2. Rotatably mounted within the wheel head 11 is a main wheel spindle 9 which is provided at an outer end thereof with a wheel spindle 8 which carries a grinding wheel G. The main wheel spindle 9 is mounted in electro-magnetic bearings 10, 10 in the X-axis directions. The main wheel spindle 9 is driven by the motor 12 via a belt transmission 13.

Mounted on the work head table 3 are a work head 17 and a motor 18. Rotatably mounted within the work head 17 is a work spindle 15 which is provided at an outer end thereof with a chuck 14. The work spindle 15 is mounted in roller bearings 16, 16 which extend in the X-axis directions. The work spindle 15 is rotationally driven by the motor 18 via a belt transmission 19.

A grinding program control unit provided with the machining condition detecting apparatus comprises an excitation current detector 20 in the electro-magnetic bearings 10 on the side of the latter adjacent the grinding wheel G, the detector 20 being arranged to detect excitation current applied to the electro-magnetic bearing 10 to operate the latter; a grinding/machining condition detecting circuit 30 for processing and judging detecting signals inputted from the excitation current detector 20; a process monitor 41; a sequence program unit/numerical control unit 42; and feed driving circuits 43 and 44.

The excitation current detector 20 is connected to the power supply circuit of the excitation current to detect the excitation current in the electro-magnetic bearings 10, the latter being arranged to support the wheel spindle 9 in the wheel head 11.

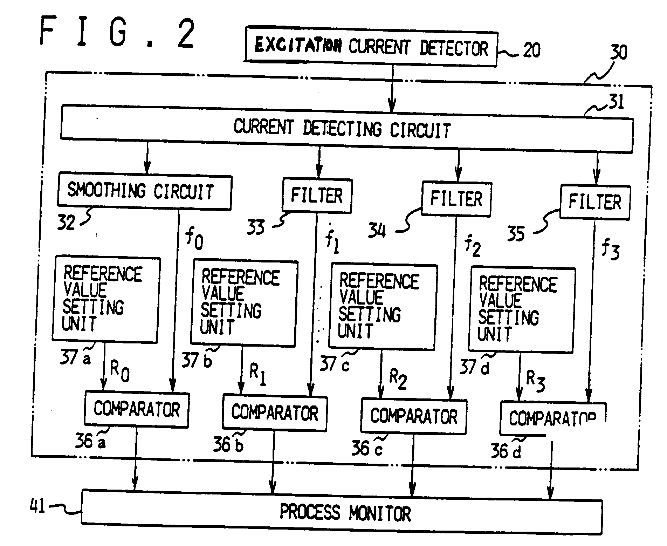

As shown in Figure 2, the grinding/machining condition detecting circuit 30 consists of a current detecting circuit 31; a smoothing circuit filter 32 which averages the detection signals from the excitation current detector 20 in time domain and outputs signals when neither eccentricity nor distortion appears on the machining face of the workpiece; a workpiece rotational frequency band pass filter 33 which is adapted to pass a frequency component corresponding to the eccentricity of the machining face of the workpiece; a workpiece rotational frequency partial band pass filter 34 which is adapted to pass a frequency component corresponding to sectional distortion of the machining face of the workpiece; a tool spindle rotary bending resonant frequency band pass filter 35 which is adapted to pass a frequency component corresponding to the machining force applied to the workpiece; comparators 36a through 36d and reference value setting units 37a through 37d. These components are connected to operate in the following manner.

The current detecting circuit 31, when it has been inputted with excitation current detecting signals from the excitation current detector 20, converts these signals into voltages. Thus, the converted excitation current detecting signals are inputted respectively to the comparators 36a through 36d via the smoothing circuit filter 32 (for time-averaging the displacement signals), the workpiece rotational frequency band pass filter 33 (Nw pass filter), the workpiece rotational frequency partial band pass filter 34 (Nw - nNw pass filter) and the wheel spindle rotary bending resonant frequency band pass filter 35 (Nc pass filter). Inputted to the comparators 36a through 36d are set reference value signals set in the reference value setting units 37a through 37d. The comparators 36a through 36d compare the inputted displacement detecting signals with the set reference value signals. If there are differences therebetween, difference signals are inputted to the process monitor 41.

The process monitor 41 and the sequence program unit/numerical control unit 42 input command signals to driving circuits 43 and 44 of the feed servo motors 4 and 6. The servo motor 4 connected to the driving circuit 43 is driven under the control of this circuit 43 upon being inputted. The servo motor 6 connected to the driving circuit 44 is driven under the control of this circuit 44 upon being inputted.

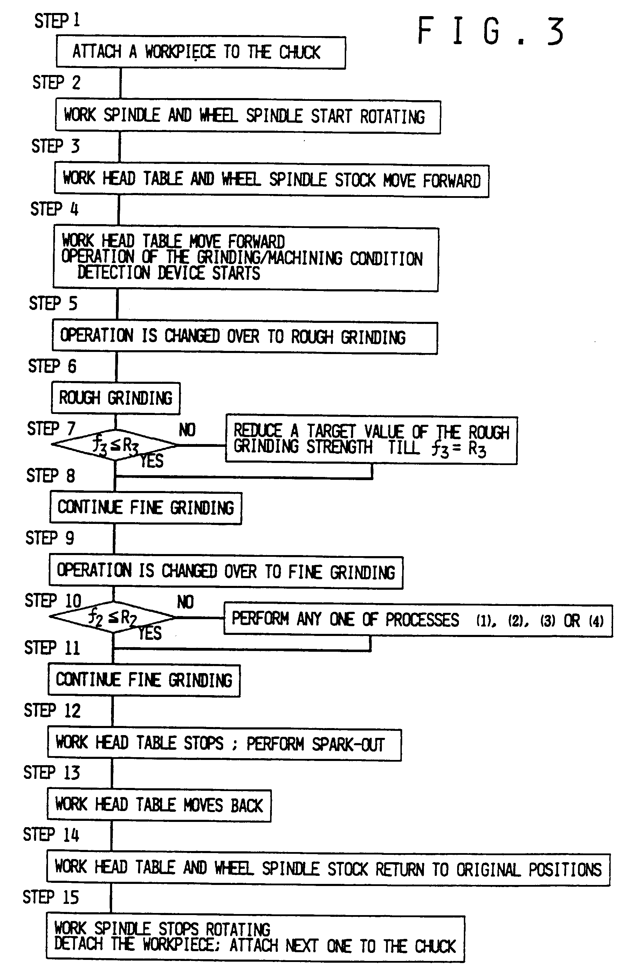

A description will now be given of the operation and function of the grinding program control unit. Grinding/machining processes are illustrated by the flow chart of Figure 3.

The operation starts with chucking a workpiece W by use of the chuck 14 (step 1).

The motor 18 rotates at a predetermined angular speed in response to a command from the sequence program unit/numerical control unit 42. As a result, the work spindle 15, and consequently a workpiece W carried thereby, is rotationally driven via the belt transmission mechanism 19. Simultaneously, the motor 12 functions to rotationally drive the main wheel spindle 9, and thus the grinding wheel G, through the belt transmission mechanism 13 (step 2).

The servo motor 6 is controlled by the control unit 42 and operates to move forward (downward in Figure 1) the work head table 3 via the feed screw mechanism 7. A hollow portion of the workpiece W is positioned to face the grinding wheel G. On the other hand, the servo motor 4 is controlled by the control unit 42 and operates to move forward (leftward in Figure 1) the wheel spindle stock 2 through the feed screw mechanism 5. The grinding wheel G is forced to enter the hollow portion of the workpiece W (step 3).

The work head table 3 is advanced at a slightly high gap-eliminate velocity by the actuation of the servo motor 6. Then starts the operation of the grinding/machining condition detecting unit (step 4).

The excitation current detector 20 dynamically detects an excitation current in the electro-magnetic bearings 10, 10 which support the wheel spindle 9 and the excitation current which changes with the displacement of the wheel spindle 9 by grinding. Upon a detection of the excitation current, an excitation current detection signal is inputted to the current detecting circuit 31, wherein the current detection signal is converted into a voltage signal. The voltage signals are respectively inputted to the smoothing circuit 32, the workpiece rotational frequency band pass filter 33, the workpiece rotational frequency partial band pass filter 34, and the wheel spindle rotary bending resonant frequency band pass filters 35. As a consequence of detecting the excitation current with the excitation current detector 20, there are obtained excitation current detection signals having frequencies corresponding to the respective workpiece conditions and grinding conditions.

Until the grinding wheel G contacts an inner peripheral face of the workpiece W, a detected excitation current signal, which is mainly of a frequency Ng component depending on the rotational accuracy of the wheel spindle 8, is inputted to the current detecting circuit 31. There is, however, no output signal from the respective filters.

The grinding wheel G contacts the inner peripheral face of the workpiece W. Then starts the grinding process. At this time, an excitation current detecting signal representative of the condition of the inner peripheral face of the workpiece is overlapped with the detected excitation current signal mainly of the frequency Ng component depending on the rotational accuracy of the wheel spindle 8. The overlapped signals are inputted to the current detecting circuit 31. The detecting signal is then outputted from any one of the smoothing circuit 32, the workpiece rotational frequency band pass filter 33 and the workpiece rotational frequency partial band pass filter 34.

For instance, if neither eccentricity nor distortion appears on the inner peripheral face of the workpiece W, a detecting signal f₀ coming from the smoothing circuit 32 is to be outputted.

If the inner peripheral face of the workpiece W undergoes a sectional distortion to assume an ellipse or 3-lobe skew circle or --- n-lobe skew circle, detecting signals f₂ of each partial frequency band is outputted from the band pass filter 34 prior to the detecting signal f₀. If the inner peripheral face of the workpiece W is eccentric with respect to the rotary axial line of the work spindle 15, the first priority is given to the outputting of the detecting signal f₁ from the band pass filter 33.

The output signals f₀, f₁ and f₂ in any cases are inputted to the comparators 36a through 36c. These output signals are compared with reference values R₀, R₁, and R₂ which are set in the setting units 37a through 37c. As a result of this comparison, if greater than the set reference value, the detecting signal is inputted to the monitor 41.

In consequence of this, the servo motor 6 is controlled via the feed driving circuit 44 by signals A₀, A₁, and A₂ outputted from the monitor 41. The operation is changed over to rough grinding (step 5).

Rough grinding is effected with a predetermined rough grinding force. As rough grinding cutting advances, the output signals f₀, f₁, and f₂ typically increase. When the grinding wheel G contacts the entire periphery, the output signals f₁ and f₂ are reduced down to zero. Provided that the cutting quality of the grinding wheel G does not deteriorate, the output signal f₀ ceases to increase and is kept constant (step 6).

If the excitation current detecting signal f₃ from the band pass filter 35 is larger than the reference value R₃ set by the setting unit 37d during a rough grinding feed, a detecting signal A₃ is inputted to the monitor 41. As a result, a predetermined target value of the rough grinding force in the process monitor 41 is reduced until the excitation current detecting signal f₃ from the band pass filter 35 reaches the reference value R₃ set by the setting unit 37d. The servo motor 6 undergoes control to be decelerated correspondingly via the feed driving circuit 44 (step 7).

Thus, rough grinding continues with a predetermined rough grinding force, as a result of which the excitation current detecting signal f₃ from the band pass filter 35 becomes smaller than the reference value R₃ set by the setting unit 37d, until a predetermined fine grinding changeover point is reached (step 8).

For example, the servo motor 6 is controlled via the feed driving circuit 44 by the signals outputted from the monitor 41 during the inputting to the process monitor 41, of the signals at the time of reaching the fine grinding strength changeover point, i.e., when a residual grinding allowance comes to a set value, a sizing signal set by a sizing unit is outputted, a positional signal of the work head table 3 comes to a predetermined level, or the cutting program numerical value reaches a predetermined value (step 9).

If the excitation current detecting signal f₂ from the band pass filter 34 is not smaller than the reference value R₂ set by the setting unit 37c even when coming into the fine grinding process, the detecting signal is inputted to the process monitor 41. On that occasion, any one of the following processes is to be performed.
(1) The predetermined fine grinding operation continues as it is. Even at the termination of fine grinding, if the excitation current detecting signal f₂ transmitted from the workpiece rotational frequency partial band pass filter 34 is not less than the reference value R₂ set by the reference value setting unit 37c, the workpiece W concerned is abandoned.
(2) The predetermined target value of the fine grinding force in the monitor 41 is reduced until the excitation current detecting signal f₂ from the band pass filter 34 reaches the reference value R₂ set by the setting unit 37c. The servo motor 6 is controlled to decrease the speed through the feed driving circuit 44. Fine grinding continues as it is until a fine grinding ending size is reached.
(3) Fine grinding is immediately stopped, and the workpiece concerned is abandoned.
(4) The predetermined target value of the fine grinding force in the monitor 41 is reduced until the excitation current detecting signal f₂ from the band pass filter 34 reaches the reference value R₂ set by the setting unit 37c. The motor 18 is controlled to reduce the speed correspondingly through the driving circuit (not shown). The number of revolutions of the work spindle 15 is reduced (step 10). The fine grinding operation is effected with the predetermined fine grinding force. In normal fine grinding, only a detected displacement signal, which is mainly of the frequency Ng component substantially depending on the rotational accuracy of the wheel spindle 8, is inputted to the current detecting circuit 31. Provided that the cutting quality of the grinding wheel G does not deteriorate, the output signal f₀ is also decreased and kept constant (step 11).

When the workpiece reaches finishing dimensions by fine grinding, for instance, the sizing signal set by the sizing unit is inputted to the process monitor 41. The servo motor 6 is stopped via the feed driving circuit 44 by the signal outputted from the monitor 41. Then spark-out is performed. The output signal f₀ is also decreased. The detected excitation current signal comes to have chiefly the frequency Ng component depending on the rotational accuracy of the wheel spindle 8 (step 12).

Thereafter, the servo motors 4 and 6 are controlled to operate through the feed driving circuits 43 and 44 by the signals outputted from the monitor 41. After the work head table 3 has moved back via the feed screw mechanism 7 (step 13), the wheel spindle stock 2 also retreats via the feed screw mechanism 5. The grinding wheel G is withdrawn from the inside of the hollow portion of the workpiece W, while the wheel spindle stock 2 returns to its original position. Simultaneously, the work head table 3 further moves back to the original position (step 14).

The motor 18 is stopped by the command of the sequence program unit/numerical control unit 42, as a result of which the work spindle 15, and thus the workpiece W. stops rotating. The finished workpiece W is detached and a replacement workpiece is attached by means of the chuck 14 (step 15).

In the above embodiment, displacement of the wheel spindle 9 is detected by the excitation current detector 20 as a result of a change of the excitation current in the electro-magnetic bearings 10. The detected excitation current signal is inputted to the current detecting circuit 30. Alternatively, if desired, a magnetic flux detecting signal may be inputted into a magnetic flux detecting circuit by detecting a change of the magnetic flux of the electromagnet in the magnetic bearing by means of a magnetic flux detector instead of detecting the excitation current.

While the machining in the above embodiment is internal grinding, the present invention can also be applied to other kinds of grinding and cutting processes.

In the machining condition detecting apparatus described above, the conditions during the grinding/cutting operations are detected with a high degree of accuracy. A variety of conditions are thereby analytically detected. It is therefore feasible to obtain output signals capable of correspondingly controlling the machine tool. The machining condition detecting apparatus described above makes possible an highly accurate adaptive control of the machine tool.

## Claims

1. An apparatus for detecting machining conditions in a machine tool with electro-magnetic bearing means (10) for magnetically supporting at least one of a tool spindle (8) and a work spindle (15) for holding a workpiece; with a detector (20) for detecting a variable which depends upon the electro-magnetic state of the bearing means (10) and for producing detection signals in relation thereto; characterized by a plurality of different frequency band pass filters (32-35) coupled to the detector (20) so as to receive the detection signals from the latter; and comparator means (36a-36d) for comparing output signals of said different frequency band pass filters (32-35) with respective set values.

2. An apparatus as claimed in claim 1 in which the detector is an excitation current detector (20) for detecting excitation current applied to the electro-magnetic bearing means (10) to operate the latter.

3. An apparatus as claimed in claim 1 or 2 characterised in that one of said frequency band pass filters (32-35) comprises a workpiece rotational frequency band pass filter (33) which is adapted to pass a frequency component corresponding to the eccentricity of the machining face of the workpiece.

4. An apparatus as claimed in any preceding claim characterised in that one of said frequency band pass filters (32-35) comprises a workpiece rotational frequency partial band pass filter (34) which is adapted to pass a frequency component corresponding to sectional distortion of the machining face of the workpiece.

5. An apparatus as claimed in any preceding claim characterised in that one of said frequency band pass filters (32-35) comprises a tool spindle rotary bending resonant frequency band pass filter (35) which is adapted to pass a frequency component corresponding to the machining force applied to the workpiece.

6. An apparatus as claimed in any preceding claim characterised in that one of said frequency band pass filters (32-35) comprises a smoothing circuit (32) which averages said detection signals in time domain and outputs signals when neither eccentricity nor distortion appears on the machining face of the workpiece.

7. A machine tool characterised by being provided with an apparatus as claimed in any preceding claim, the machine tool having a control unit (41,42) which receives signals from the comparator means (32-35) and which controls the operation of the machine tool in relation thereto.

## Patentansprüche

1. Einrichtung zum Erfassen von Bearbeitungszuntänden in einer Werkzeugmaschine mit elektromagnetischen Lagermitteln (10) zum magnetischen Tragen einer Werkzeugspindel (8) und/oder einer Werkstückspindel (15) zum Halten eines Werkstücks, mit einem Detektor (20) zum Erfassen einer Variablen, welche von dem elektromagnetischen Zustand der Lagermittel (10) abhängt und zum Erzeugen von Erfassungssignalen in Beziehung dazu, gekennzeichnet durch eine Mehrzahl verschiedener Frequenzbandpaßfilter (32-35), welche mit dem Detektor (20) gekoppelt sind, um die Erfassungssignale von letzterem zu empfangen, und Vergleichsmittel (36a-36d) zum Vergleichen von Ausgangssignalen der verschiedenen Frequenzbandpaßfilter (32-35) mit jeweiligen Sollwerten.

2. Einrichtung nach Anspruch 1, in welcher der Detektor ein Anregungsstromdetektor (20) ist zum Erfassen eines den elektromagnetischen Lagermitteln (10) zum Betreiben der letzteren zugeführten Anregungsstroms.

3. Einrichtung nach Anspruch 1 oder 2, dadurch gekennzeichnet, daß eines der Frequenzbandpaßfilter (32-35) ein Werkstückdrehfrequenz-Bandpaßfilter (33) umfaßt, welches zum Durchlassen einer Frequenzkomponente ausgebildet ist, die der Exzentrizität der Bearbeitungsfläche des Werkstücks entspricht.

4. Einrichtung nach einem der vorhergehenden Ansprüche, dadurch gekennzeichnet, daß eines der Bandpaßfilter (32-35) ein Werkstückdrehfrequenz-Teilbandpaßfilter (34) umfaßt, welches dazu ausgebildet ist, eine Frequenzkomponente durchzulassen, die einer Schnittverzerrung der Bearbeitungsfläche des Werkstücks entspricht.

5. Einrichtung nach einem der vorhergehenden Ansprüche, dadurch gekennzeichnet, daß eines der Frequenzbafidpaßfilter (32-35) ein Werkzeugspindel-Verwindungsresonanzfrequenz-Bandpaßfilter (35) umfaßt, welches dazu ausgebildet ist, eine Frequenzkomponente durchzulassen, die der an das Werkstück angelegten Rearbeitungakraft entspricht.

6. Einrichtung nach einem der vorhergehenden Ansprüche, dadurch gekennzeichnet, daß eines der Frequenzbandpaßfilter (32-35) eine Glättungsschaltung (32) umfaßt, welche die Erfassungssignale im Zeitraum mittelt und Signale ausgibt, wenn weder eine Exzentrizität noch eine Verzerrung an der Bearbeitungsfläche des Werkstücks auftritt.

7. Werkzeugmaschine, dadurch gekennzeichnet, daß sie eine Einrichtung nach einem der vorhergehenden Ansprüche umfaßt, wobei die Werkzeugmaschine eine Steuereinheit (41, 42) aufweist, welche Signale von den Vergleichsmitteln (32-35) empfängt und welche den Betrieb der Werkzeugmaschine in Beziehung dazu steuert.

## Revendications

1. Dispositif pour détecter des conditions d'usinage dans une machine-outil comportant un palier (10) électromagnétique destiné à supporter magnétiquement au moins une broche parmi une broche (8) outil et une broche (15) de travail destinée à tenir une pièce à usiner ; un capteur (20) destiné à détecter une variable qui dépend de l'état électromagnétique du palier (10) et à produire des signaux de détection en fonction de cette variable, caractérisé par une pluralité de filtres (32 à 35) passe-bande de fréquence différents couplés au capteur (20) de manière à recevoir les signaux de détection de ce dernier ; et des moyens (36a à 36d) comparateurs destinés à comparer des signaux de sortie des filtres (32 à 35) passe-bande de fréquence différents à des valeurs fixées respectives.

2. Dispositif suivant la revendication 1, dans lequel le capteur est un capteur (20) de courant d'excitation destiné à détecter du courant d'excitation appliqué au palier (10) électromagnétique pour le faire fonctionner.

3. Dispositif suivant la revendication 1 ou 2, caractérisé en ce que l'un des filtres (32 à 35) passe-bande de fréquence est un filtre (33) passe-bande de fréquence de rotation de pièce à usiner qui est adapté pour laisser passer une composante de fréquence qui correspond à l'extrémité de la face d'usinage de la pièce à usiner.

4. Dispositif suivant l'une quelconque des revendications précédentes, caractérisé en ce que l'un des filtres (32 à 35) passe-bande de fréquence est un filtre (34) passe-bande partiel à fréquence de rotation de pièce à usiner qui est adapté pour laisser passer une composante de fréquence correspondant à la déformation en coupe de la face d'usinage de la pièce à usiner.

5. Dispositif suivant l'une quelconque des revendications précédentes, caractérisé en ce que l'un des filtres (32 à 35) passe-bande de fréquence est un filtre (35) passe-bande de fréquence résonnant de flexion en rotation de broche d'outil qui est adapté pour laisser passer une composante de fréquence correspondant à la force d'usinage appliquée à la pièce à usiner.

6. Dispositif suivant l'une quelconque des revendications précédentes, caractérisé en ce que l'un des filtres (32 à 35) passe-bande de fréquence comporte un circuit (32) de lissage qui calcule une moyenne des signaux de détection dans le temps et fournit en sortie des signaux quand ni une excentricité, ni une déformation n'apparaissent sur la face d'usinage de la pièce à usiner.

7. Machine-outil caractérisée par le fait d'être munie d'un dispositif tel que revendiqué dans l'une quelconque des revendications précédentes, la machine-outil ayant une unité (41, 42) de commande qui reçoit des signaux des moyens (32 à 35) comparateurs et qui commande le fonctionnement de la machine-outil en fonction de ces signaux.
